Europäisches Patentamt

European Patent Office

Office européen des brevets

(11) Publication number: **0 154 963 B1**

## EUROPEAN PATENT SPECIFICATION

(45) Date of publication of patent specification: **05.02.92**   (51) Int. Cl.⁵: **H04L 27/22**

(21) Application number: **85102752.4**

(22) Date of filing: **11.03.85**

(54) **Ouarternary differential PSK demodulator.**

(30) Priority: **12.03.84 JP 46880/84**
**19.03.84 JP 52744/84**

(43) Date of publication of application:
**18.09.85 Bulletin 85/38**

(45) Publication of the grant of the patent:
**05.02.92 Bulletin 92/06**

(84) Designated Contracting States:
**DE FR GB**

(56) References cited:
**US-A- 4 336 500**

(73) Proprietor: **VICTOR COMPANY OF JAPAN,**
**LIMITED**
**3-12, Moriya-cho**
**Kanagawa-ku Yokohama(JP)**

(72) Inventor: **Ishigaki, Yukinobu**
**671-1, Oyama-cho**
**Machida-shi Tokyo(JP)**
Inventor: **Hirohashi, Kazutoshi**
**1-25, Kamigo-cho**
**Totsuka-ku Yokohama(JP)**

(74) Representative: **Grams, Klaus Dieter, Dipl.-Ing.**
**et al**
**Patentanwaltsbüro Tiedtke-Bühling-Kinne-**
**Grupe-Pellmann-Grams-Struif Winter-Roth**
**Bavariaring 4**
**W-8000 München 2(DE)**

## Description

The present invention relates to a quaternary differential phase shift keying demodulator according to the preamble of claim 1.

A quaternary differential phase shift keying demodulator of that kind is known from **US-A-4 336 500**. In this prior art document there is disclosed a quaternary differential phase shift keying or PSK demodulator which is comprising an input terminal and two output terminals, a demodulating means in the form of two multipliers and two filters, which means is responsive to an input signal S(t) applied to the input terminal and which is generating two output signals $X_i$ and $X_q$ being extracted from the input signal. Furthermore there are provided a variable frequency oscillator and a 90-degree phase shifter (hybrid circuit) for generating carrier frequency tracking signals which are applied to the demodulating means. An input signal in the form of a phase control signal is generated and fed back by a closed loop means which mainly consists of four multipliers, one adder, one subtractor and two networks.

This known PSK demodulator suffers from the drawback that it will exhibit poor stability when being operated at frequencies higher than about 1 Megahertz. Another, even more important disadvantage lies therein that this known PSK demodulator is not free from temperature-dependant DC drift problems which affect the stability of the a.m. closed loop means; consequently, the quality of the demodulated output signals is deteriorated by changes in temperature.

It therefore is the object of the present invention to improve a quaternary differential phase shift keying demodulator according to the preamble of claim 1 in such a way that it is exhibiting excellent output signal quality at high frequencies and irrespective of changes in temperature.

According to the present invention this object is achieved by the advantageous measures as indicated in the characterizing portion of claim 1.

By the provision of synchronous detectors in the demodulating means and by the further provision of four double-balanced phase detectors in the closed loop means it is possible to obtain a very high stability even then when the PSK demodulator is operated at very high frequencies above of 1 Megaherz. As a consequence, the demodulated output signals exhibit an excellent signal quality even at these high frequencies.

When ambient temperature varies, the output signals of all four double-balanced phase detectors are affected in the same way. If these output signals would be processed by means of one adder and one subtractor - as it is the case in the PSK demodulator known from **US-A-4 336 500** - a resultant output signal from the subtractor is not affected by temperature change due to subtraction of respective offset values; the resultant output signal from the adder, however, even exhibits a doubled offset value due to temperature change. Consequently, the phase control signal fed back to the VCO would be significantly changed so that the quality of the demodulated ouput signals is deteriorated. According to the advantageous measures as indicated in new claim 1 there are provided, however, two subtractors so that, in combination with the further provision of one inverted phase detector input signal temperature offset values are compensated completely; as a result, the phase control signal fed back to the VCO remains unchanged even at great temperature changes so that the quality of the demodulated ouput signals is always excellent.

A further advantage of this excellent temperature compensation results in a simple implementation of the PSK demodulator in integrated circuits.

Further advantageous features of the invention are subject matter of the subclaims.

In the following the invention will be described in more detail with reference to the accompanying drawings in which:

**Fig.**1 is a block diagram for explaining the function of a PSK demodulator;

Fig. 2 is a block diagram of an embodiment of the invention;

Fig. 3 is a waveform diagram associated with the Fig. 2 embodiment;

Fig. 4 is a block diagram of a modified embodiment of the invention; and

Fig. 5 is a waveform diagram associated with the modified embodiment.

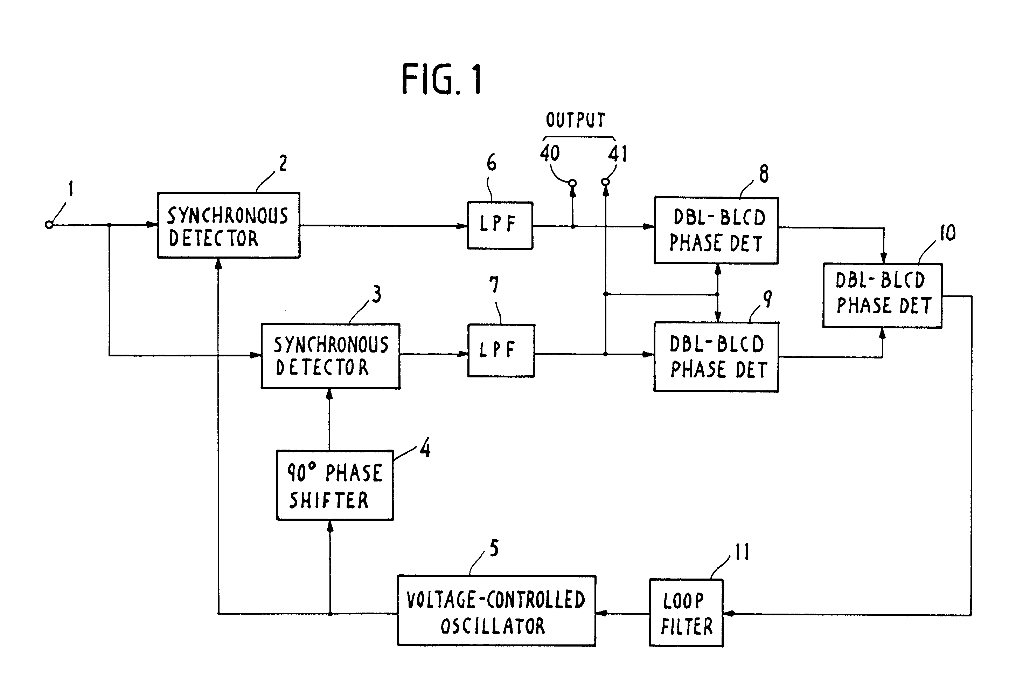

Referring now to Fig. 1, a quarternary differential PSK signal is applied through an input terminal 1 to the first inputs of synchronous detectors 2 and 3. A carrier is generated by a voltage-controlled oscillator 5 and applied to the second input of synchronous detector 2 and via a 90-degree phase shifter 4 to the second input of synchronous detector 3. The outputs of synchronous detectors 2 and 3 are passed through low-pass filters 6 and 7, respectively, to remove the carrier components which remains after the synchronous detection. The outputs of low-pass filters 6 and 7 are multiplied by a double-balanced phase detector 9 and fed to one input of a double-balanced phase detector 10. The output of low-pass filter 7 is squared by a double-balanced phase detector 9 and fed to the second input of double-balanced phase detector 10, the output of which is converted to a DC phase control signal by a loop filter 11 and fed to voltage-controlled oscillator 5. The output signals of the demodulator are withdrawn from terminals 40 and 41 coupled to the outputs of low-pass filters 6 and 7.

The input signal at terminal 1 is represented by $A2 \cos (\omega t + \phi)$ and the carrier from oscilaltor 5 $A1 \cos \omega t$ (where $\phi$ represents each of the phase values of the QPSK input signal, that is 0, $\pi/2$, $\pi$, $3\pi/2$). Then, the output of low-pass filter 6 is given by $(A1 \cdot A2 \cos \phi)/2$ and the output of low-pass filter 7 is expressed by $(A1 \cdot A2 \sin \phi)/2$.

The double-balanced phase detector 8 provides multiplication operation on the signal $(A1 \cdot A2 \cos \phi)/2$ from low-pass filer 6 and the signal $(A1 \cdot A2 \sin \phi)/2$ from low-pass filter 7 and provides a product signal having a phase $\sin 2\phi$ to the double-balanced phase detector 10. The double-balanced phase detector 9 provides a squaring operation on the signal $(A1 \cdot A2 \sin \phi)/2$ from filter 7 so that it provides a product having a phase $-\cos 2\phi$ to the double-balanced phase detector 10.

The input signals $\sin 2\phi$ and $-\cos 2\phi$ to the double-balanced phase detector 10 are multiplied to derive an output signal $-\sin 4\phi$.

Because of the quadrupled phase, the original phase information or modulating signal component is canceled in the phase detector 10. Phase error components synchronously detected by phase detectors 2 and 3 are thus derived from loop filter 11. Carriers supplied to synchronous detectors 2 and 3 are thus maintained in a definite phase relation with the original carrier. The double-balanced phase detectors operate successfully at frequencies higher than 1 Megaherz.

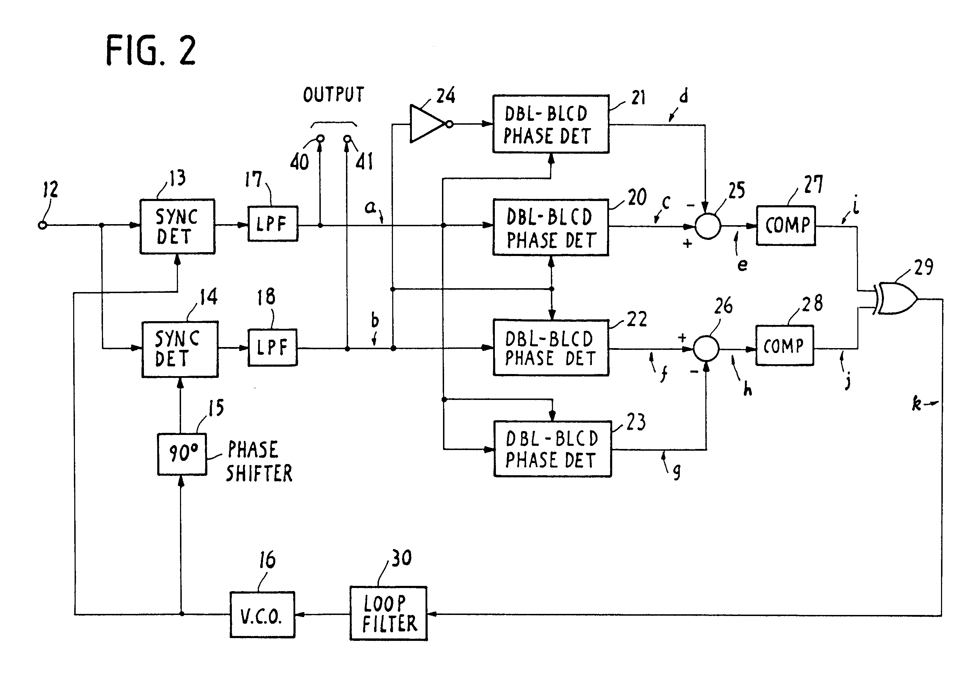

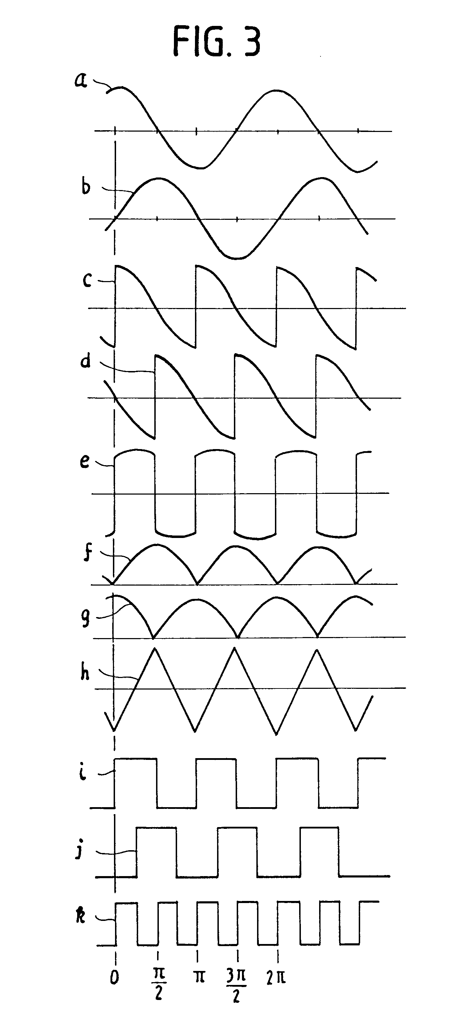

An embodiment of the invention is shown in Fig. 2. A carrier-suppressed QPSK signal received at terminal 12 is applied to synchronous detectors 13 and 14. A second input signal to synchronous detector 13 is supplied from a voltage-controlled oscillator 16 and a second input to synchronous detector 14 is supplied from oscillator 16 via a 90-degree phase shifter 15. After synchronous detection, the outputs of synchronous detectors 13 and 14 are fed to carrier-rejection low-pass filters 17 and 18, respectively, to derive signals shown at a and b in Fig. 3.

The outputs of filters 17 and 18 are coupled to the input terminals of a double-balanced phase detector 20 to generate an output signal shown at c, Fig. 3, which is representative of the product of the instantaneous values of the filter outputs.

The output of filter 18 is coupled via inverter 24 to one input of a double-balanced phase detector 21 which receives a second input from the filter 17 to derive an output signal d, Fig. 3.

The output of low-pass filter 18 is applied to input terminals of a double-balanced phase detector 22 to square the instantaneous value of the input signal to derive a signal f, Fig. 3.

Similarly, the output of filter 17 is squared by a double-balanced phase detector 23 to derive an output signal g, Fig. 3.

The waveform d is subtracted from the waveform c in a subtractor 25. The result is a generation of substantially rectangular pulses e which are fed to a comparator 27 to provide sharply defined rectangular pulses i having a repetition frequency twice the frequency of the outputs of low-pass filters 17, 18. Likewise, the waveform g is subtracted from the waveform f by a subtractor 26 to develop substantially triangular pulses h which are fed to a comparator 28 to generate rectangular pulses j having a repetition frequency twice the frequency of the outputs of low-pass filters 17, 18 with a phase difference of 90 degrees with respect to the output of comparator 27.

The outputs of comparators 27 and 28 are supplied to an Exclusive-OR gate 29. The waveform shown at k represents the output of Exclusive-OR gate 29 which varies at a frequency four times higher than the frequencies of the outputs of low-pass filters 17, 18. Since the input PSK signal is at one of four phase values 0, $\pi/2$, $\pi$, $3\pi/2$ radians, these phase values are converted by Exclusive-OR gate 29 to 0, $2\pi$, $4\pi$ and $6\pi$ radians, respectively, thereby canceling the original modulating signal. The output of Exclusive-OR gate 26 thus exclusively contains a component representative of the phase errors detected by the synchronous detectors 13 and 14.

The output of Exclusive-OR gate 29 is filtered by a loop filter 30 to extract the phase error component from the output of Exclusive-OR gate 26 and develop a DC phase control signal having a magnitude and polarity determined by the magnitude and direction, respectively, of the phase difference between the original carrier and the local carrier from oscillator 16. The phase control signal is applied to voltage-controlled oscillator 16 to maintain a definite phase relation between the two carriers.

Because of the double-balanced structure, each of the output waveforms of phase detectors 20 to 23 is symmetrical with respect to zero voltage level. A further feature of the invention lies in the fact that undesirable DC drifts which occur with a temperature variation in phase detectors 20 and 21 are canceled by subtractor 25 and those in phase detectors 22 and 23 are cancelled by subtractor 26. The elimination of DC drifts allows the PSK demodulator to be implemented in integrated circuits.

Terminals 40 and 41 are respectively coupled to the outputs of low-pass filters 17 and 18 to extract demodulator output signals. Quarternary ifferential outputs will be derived from the demodulator outputs in a circuit, not shown, by taking the difference between preceding and succeeding phase components. The differential outputs will then be translated into (0, 0), (0, 1), (1, 1) and (1, 0) which are interpreted as 0, $\pi/2$, $\pi$ and $3\pi/2$ radians, respectively.

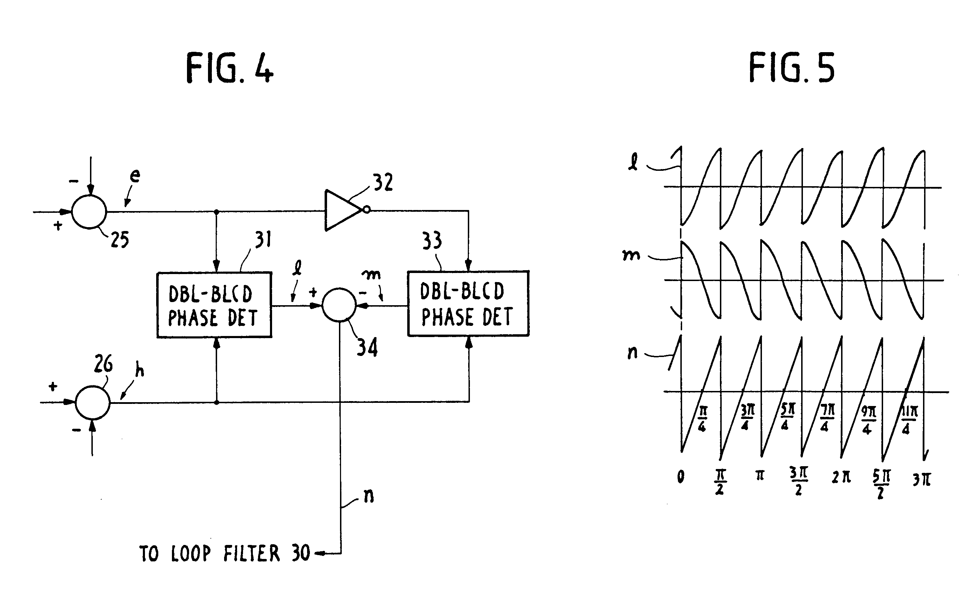

Fig. 4 is a modification of the PSK demodulator in which parts corresponding to those in Fig. 2 are marked by the same numerals as used in Fig. 2. In this modification, the output signal e of subtractor 25 is supplied to one input of a double-balanced phase detector 31 and through an inverter 32 to one input of a double-balanced phase detector 33, and the output signla h of subtractor 26 is supplied to the other inputs of double-balanced phase detectors 31 and 33. Therefore, the waveforms e and h are multiplied by phase detector 31 to derive a sawtooth wave which is a train of pulses with a nonlinearly varying amplitudes as shown at $\ell$ in Fig. 4 and the inverted waveform e and waveform h are multiplied to derive a sawtooth wave m which is a train of pulses having amplitudes nonlinearly varying in a direction opposite to the waveform $\ell$. It is seen that these nonlinear sawtooth waves vary at a frequency four times higher than the outputs a and b of low-pass filters 17 and 18. The sawtooth wave m is subtracted from the sawtoothw wave $\ell$ in a subtractor 34 to produce sawtooth wave pulses n which are applied to loop filter 30. The sawtooth wave pulses n have a linearly varying amplitude having twice the amplitude of waveform $\ell$.

## Claims

1. A quaternary differential phase shift keying **(PSK)** demodulator comprising:

    **[A]** an input terminal **(12)** and two output terminals **(40,41)**;

    **[B]** a demodulating means **(13,14,17,18)** responsive to an input signal applied to said input terminal **(12)** and generating two output signals **(a,b)** extracted from said input signal, each signal being supplied to one of said output terminals **(40,41)**;

    **[C]** a variable frequency oscillator **(16)** and a 90-degree phase shifter **(15)** for generating carrier frequency tracking signals being applied to said demodulating means **(13,14,17,18)**; and

    **[D]** closed loop means **(20-30)** responsive to said two output signals **(a,b)** for generating a phase control signal fed back to an input of said variable frequency oscillator **(16)**;

    **characterized in that**

    **[E]** said demodulating means comprises first and second synchronous detectors **(13,14)**; and in that said closed loop means comprises

        **[F1]** four double-balanced phase detectors **(20-23)** each having two input terminals and producing one output signal which is a product of signals applied to said input terminals, wherein

        **[F2]** a first double-balanced phase detector **(20)** receives said two output signals **(a,b)**,

        **[F3]** a second double-balanced phase detector **(21)** receives said first output signal **(a)** and said second output signal the polarity of which being inverted **(-b)**, and wherein

        **[F4]** third and fourth double-balanced phase detectors **(22,23)** each receive only said first **(a)** and respectively said second output signal **(b)** at both input terminals;

    **[G]** two subtractors **(25,26)** each responsive to said output signals **(c,d,e,f)** of said first and second **(20,21)** respectively of said third and fourth double-balanced phase detectors **(22,23)** and generating a difference signal **(e,h)**;

    **[H]** and means **(27-30)** responsive to said two difference signals **(e,f)** for providing said phase control signal.

2. A demodulator according to claim 1, **characterized** in that said means responsive to said two difference signals comprises

    **[A]** means **(27)** for shaping the waveform of said first difference signal **(e)** into rectangular pulses of a first train;

    **[B]** means **(27)** for shaping the waveform of said second difference signal **(f)** into rectangular pulses of a second train;

    **[c]** and an Exclusive-Or gate **(29)** responsive to said first and second pulse trains and providing output pulses **(k)** to a loop filter **(30)**.

3. A demodulator according to claim 1, **characterized** in that said means responsive to said two difference signals comprises

    **[A]** a fifth double-balanced phase detector **(31)** responsive to said first and second difference signals **(e, f)**, respectively, for generating an output signal representative of a product of said difference signals **(e, f)**;

    **[B]** a sixth double-balanced phase detector **(33)** responsive to a signal which is an inverted signal of said first difference signal **(e)** and responsive to said second difference signal **(f)** for generating an output signal representative of a product of said inverted first difference signal **(e)** and said second difference signal **(f)**;

    **[c]** and a third subtractor **(34)** responsive to said output signals of said fifth and sixth double-balanced phase detectors **(31, 33)** for providing an output signal representative of a difference in magnitude between said fifth and sixth double-balanced phase detector output signals to a loop filter **(30)**.

4. A demodulator according to one of claims 1 to 3, **characterized** by

[A] a first low-pass filter **(17)** connected to an output terminal of said first synchronous detector **(13)** for rejecting carrier components and for applying a first filter output signal to said first, second and fourth double-balanced phase detectors **(20, 21, 23)**;

[B] and a second low-pass filter **(18)** connected to an output terminal of said second synchronous detector **(14)** for rejecting carrier components and for applying a second filter output signal to said first, second and third double-balanced phase detectors **(20, 21, 22)**.

## Revendications

1. Démodulateur à conversion à déphasage différentiel quaternaire comportant:

A) une borne d'entrée (12) et deux bornes de sortie (41, 41);

B) des moyens de démodulation (13, 14, 17, 18) réagissant à un signal d'entrée appliqué à ladite borne d'entrée (12) et générant deux signaux de sortie (a, b) extraits dudit signal d'entrée, chaque signal étant délivré à l'une desdites bornes de sortie (40, 41);

C) un oscillateur à fréquence variable (16) et un dispositif de décalage de phase à 90° (15) pour générer les signaux de suivi de fréquence porteuse appliqués auxdits moyens de démodulation (13, 14, 17, 18); et

D) des moyens formant boucle fermée (20 à 30) régissant auxdits deux signaux de sortie (a, b) en générant un signal de contrôle de phase renvoyé à une entrée dudit oscillateur à fréquence variable (16); caractérisé en ce que

E) lesdits moyens de démodulation comportent des premier et deuxième détecteurs synchrones (13, 14); et en ce que lesdits moyens formant boucle fermée comportent

F1) quatre détecteurs de phase à double équilibrage (20 à 23) ayant chacun deux bornes d'entrée et produisant un signal de sortie qui est un produit des signaux appliqués auxdites bornes d'entrée, dans lesquels

F2) un premier détecteur de phase à double équilibrage (20) reçoit lesdits deux signaux de sortie (a, b),

F3) un deuxième détecteur de phase à double équilibrage (21) reçoit ledit premier signal de sortie (a) et ledit deuxième signal de sortie dans la polarité est inversée (-b) et dans lequel

F4) des troisième et quatrième détecteurs à double équilibrage (22, 23) reçoivent chacun seulement ledit premier signal de sortie (a) et ledit deuxième signal de sortie (b), respectivement, aux deux bornes d'entrée;

G) deux soustracteurs (25, 26) réagissant chacun auxdits signaux de sortie (c, d, e, f) desdits premier et deuxième détecteurs de phase à double équilibrage (20, 21) et desdits troisième et quatrième détecteurs de phase à double équilibrage (22, 23), respectivement, et générant un signal de différence (e, h);

H) et des moyens (27 à 30) réagissant auxdits deux signaux de différence (e, f) en délivrant ledit signal de contrôle de phase;

2. Démodulateur selon la revendication 1, caractérisé en ce que lesdits moyens réagissant auxdits deux signaux de différence comportent :

A) des moyens (27) pour mettre en forme la forme d'onde dudit premier signal de différence (e), sous la forme d'impulsions rectangulaires d'un premier train;

B) des moyens (27) pour mettre en forme la forme d'onde dudit deuxième signal de différence (f), sous la forme d'impulsions rectangulaires d'un deuxième train;

C) et une porte OU exclusif (29) réagissant auxdits premier et deuxième trains d'impulsion et délivrant des impulsions de sortie (k) à un filtre à boucle (30).

3. Démodulateur selon la revendication 1, caractérisé en ce que lesdits moyens réagissant auxdits deux signaux de différence comportent:

A) un cinquième détecteur de phase d'équilibrage (31) réagissant auxdits premier et deuxième signaux de différence (e, f), respectivement, de façon à générer un signal de sortie représentatif d'un produit desdits signaux de différence (e, f);

B) un sixième détecteur de phase à double équilibrage (33) réagissant à un signal qui est un signal inversé dudit premier signal de différence (e) et réagissant audit deuxième signal de différence (f) en générant un signal de sortie représentatif d'un produit dudit premier signal de différence inversé (e) et dudit deuxième signal de différence (f);

**C**) et un troisième soustracteur (34) réagissant auxdits signaux de sortie desdits cinquième et sixième détecteurs de phase à double équilibrage (31, 33) en délivrant un signal de sortie représentatif d'une différence d'amplitude entre lesdits signaux de sortie des cinquième et sixième détecteurs de phase à double équilibrage à un filtre à boucle (30).

4. Démodulateur selon l'une quelconque des revendications 1 à 3, caractérisé par :

**A**) un premier filtre passe-bas (17) connecté à une bande de sortie dudit premier détecteur synchrone (13) afin de rejeter les composantes de porteuse et d'appliquer un premier signal de sortie de filtre auxdits premier, deuxième et quatrième détecteurs de phase à double équilibrage (20, 21, 23);

**B**) et un deuxième filtre passe-bas (18) connecté à une bande de sortie dudit deuxième détecteur synchrone (14) pour rejeter les composantes de porteuse et pour appliquer un deuxième signal de sortie de filtre auxdits premier, deuxième et troisième détecteurs de phase à double équilibrage (20, 21, 22).

**Patentansprüche**

1. Demodulator für Vierphasendifferenz-Umtastungssignale, der

[A] einen Eingangsanschluß (12) und Zwei Ausgangsanschlüsse (40, 41),

[B] eine Demoduliereinrichtung (12, 14, 17, 18), die auf ein an den Eingangsanschluß (12) angelegtes Eingangssignal anspricht und zwei aus dem Eingangssignal herausgegriffene Ausgangssignale (a, b) erzeugt, die jeweils einem der Ausgangsanschlüsse (40, 41) zugeführt werden,

[C] einen abstimmbaren Oszillator (16) und einen 90°-Phasenschieber (15) zum Erzeugen von an die Demoduliereinrichtung (13, 14, 17, 18) angelegten Trägerfrequenz-Nachführsignalen und

[D] eine auf die beiden Ausgangssignale (a, b) ansprechende Regeleinrichtung (20 bis 30) mit geschlossenem Regelkreis zum Erzeugen eines zu einem Eingang des abstimmbaren Oszillators (16) zurückgeführten Phasenregelsignals aufweist,

dadurch gekennzeichnet, daß

[E] die Demoduliereinrichtung einen ersten und einen zweiten Synchrondetektor (13, 14) enthält, und daß die Regeleinrichtung

[F1] vier doppelsymmetrische Phasendetektoren (20 bis 23), die jeweils zwei Eingangsanschlüsse haben und ein Ausgangssignal erzeugen, das ein Produkt der an die Eingangsanschlüsse angelegten Signale ist, wobei

[F2] ein erster doppelsymmetrischer Phasendetektor (20) die beiden Ausgangssignale (a, b) aufnimmt,

[F3] ein zweiter doppelsymmetrischer Phasendetektor (21) das erste Ausgangssignal (a) und mit invertierter Polarität das zweite Ausgangssignal (-b) aufnimmt und

[F4] ein dritter und ein vierter doppelsymmetrischer Phasendetektor (22, 23) an beiden Eingangsanschlüssen jeweils nur das erste Ausgangssignal (a) bzw. das zweite Ausgangssignal (b) aufnehmen,

[G] zwei Subtrahierer (25, 26), die jeweils auf die Ausgangssignale (c, d, f, g) des ersten und zweiten doppelsymmetrischen Phasendetektors (20, 21) bzw. des dritten und vierten doppelsymmetrischen Phasendetektors (22, 23) ansprechen und ein Differenzsignal (e, h) erzeugen, und

[H] eine auf die beiden Differenzsignale (e, h) ansprechende Einrichtung (27 bis 30) zum Bilden des Phasenregelsignals enthält.

2. Demodulator nach Anspruch 1, dadurch gekennzeichnet, daß die auf die beiden Differenzsignale ansprechende Einrichtung

[A] eine Einrichtung (27) zum Umformen des ersten Differenzsignals (e) in Rechteckimpulse einer ersten Impulsfolge,

[B] eine Einrichtung (28) zum Umformen des zweiten Differenzsignals (h) in Rechteckimpulse einer zweiten Impulsfolge, und

[C] ein auf die erste und die zweite Impulsfolge ansprechendes Antivalenzglied (29) zum Abgeben von Ausgangsimpulsen (k) an ein Regelkreisfilter (30) enthält.

3. Demodulator nach Anspruch 1, dadurch gekennzeichnet, daß die auf die beiden Differenzsignale ansprechende Einrichtung

[A] einen ebenfalls auf das erste und das zweite Differenzsignal (e, h) ansprechenden fünften doppelsymmetrischen Phasendetektor (31) zum Erzeugen eines Ein Produkt der Differenzsignale (e, h) darstellenden Ausgangssignals,

[B] einen auf ein Signal, das ein invertiertes Signal des ersten Differenzsignals (e) ist, und das zweite Differenzsignal (h) ansprechenden sechsten doppelsymmetrischen Phasendetektor (33) zum Erzeugen eines Ein Produkt aus dem invertierten ersten Differenzsignale (e) und dem zweiten Differenzsignal (h) darstellenden Ausgangssignals und

[C] einen auf die Ausgangssignale des fünften und sechsten doppelsymmetrischen Phasendetektors (31, 33) ansprechenden dritten Subtrahierer (34) zum Abgeben eines eine Amplitudendifferenz zwischen den Ausgangssignalen des fünften und sechsten doppelsymmetrischen Phasendetektors darstellenden Ausgangssignals an ein Regelkreisfilter (30) enthält.

4. Demodulator nach einem der Ansprüche 1 bis 3, gekennzeichnet durch

[A] ein an den Ausgangsanschluß des ersten Synchrondetektors (13) angeschlossenes erstes Tiefpaßfilter (17) zum Unterdrükken von Trägerkomponenten und zum Anlegen eines ersten Filterausgangssignals an den ersten, den zweiten und den vierten doppelsymmetrischen Phasendetektor (20, 21, 23) und

[B] ein an den Ausgangsanschluß des zweiten Synchrondetektors (14) angeschlossenes zweites Tiefpaßfilter (18) zum Unterdrücken von Trägerkomponenten und zum Anlegen eines zweiten Filterausgangssignals an den ersten, den zweiten und den dritten doppelsymmetrischen Phasendetektor (20, 21, 22).

# FIG. 1

EP 0 154 963 B1

# FIG. 2

EP 0 154 963 B1

# FIG. 3

a

b

c

d

e

f

g

h

i

j

k

$0 \quad \dfrac{\pi}{2} \quad \pi \quad \dfrac{3\pi}{2} \quad 2\pi$

# FIG. 4

# FIG. 5

EP 0 154 963 B1